# EUROPEAN PATENT APPLICATION

(11) **EP 2 565 569 A1**
(43) Date of publication of application: **06.03.2013**
(21) Application number: 10850840.9
(22) Date of filing: 08.07.2010
(51) Int. Cl.: F27B 7/00, C22B 7/00

(54) **MELTING FURNACE**

(30) Priority: 30.04.2010 RU 2010118437
(71) Applicant: Alexeev, Alexander Alexeevich, St. Petersburg 193312 (RU)
(72) Inventor: ALEXEEV, Denis Alexandrovich, St.Petersburg 193315 (RU)
(74) Representative: Gulde Hengelhaupt Ziebig & Schneider
(86) International application number: PCT/RU2010/000378
(87) International publication number: WO 2011/136685

(57) **Abstract**

The invention relates to furnaces for melting metal-containing wastes and applying metallic coatings by thermodiffusion, and may be utilized for the extraction of non-ferrous metals. In a melting furnace which includes a base mounted on a foundation, a body mounted on the base and provided with a roof and a door, a removable melting drum disposed in the body and made to permit mounting on a cantilever drive shaft, and also a heater mounted on the body by means of hinges, the base is mounted on the foundation by means of a hinge with a horizontal axis of rotation perpendicular to the axis of rotation of the drum and the heater may be provided with a means permitting reciprocatory movement thereof. The arrangement makes it possible to increase the melt surface area, as a result of which the capture of globules of metal from the charge is increased, the melting time is reduced, the service life of the melting drum is increased, and the yield of metal is enhanced; removal of the melting drum from the drive shaft is simplified, and furthermore a possibility is provided for applying metallic coatings by thermodiffusion in cases where the length of the part being treated is close to the depth of the drum.

## Description

### Technical field

The invention relates to furnaces for melting metal-containing wastes and applying metallic coatings by thermodiffusion (sherardising), and may be utilized for the extraction of non-ferrous metals from mixtures and oxides and for treating the surfaces of parts.

### Background art

A known melting furnace for melting metal-containing wastes includes a removable body mounted so as to allow rotation on the foundation, a removable melting drum made to permit mounting on a cantilever drive shaft that is mounted by means of a bearing in the roof of the body, the shaft drive being attached to said roof; the bottom of the melting drum is made at an angle to its longitudinal axis, see WO 2008/147188.

The device allows pouring molten metal into the casting mold only when the drum is in a vertical position; after tapping the tap-hole the whole volume of molten metal will be poured into the casting mold; stopping the pouring of molten metal, which may be necessary e.g. when the casting mold is out of order, as well as pouring the molten metal portion-wise into different casting molds is impossible without using special-purpose mechanisms for plugging the tap-hole in the process of pouring of molten metal, which is a very complicated problem that has not been solved in the engineering solution of WO 2008/147188.

Another known melting furnace for melting metal-containing wastes includes a base rigidly fixed on a foundation, a removable body mounted on the base and provided with a roof and a door, a removable melting drum disposed in the removable body and made to permit mounting on a cantilever fixed drive shaft, and also a heater, see RU 2102668.

This engineering solution has been taken as a prototype of the present invention.

Removal of the drum from the drive shaft is done using successive small (within the limits of the gap between the drive shaft and the drum socket) vertical and horizontal displacements of the drum relative to the drive shaft:; the longitudinal axis of the drum always remains at an angle to the horizontal. As opposed to the abovementioned analogous device of WO 200/1471188, the prototype device makes it possible to stop pouring molten metal by rotating the melting drum around the longitudinal axis to a position where the tap-hole becomes higher than the level of molten metal; in addition the melting furnace can be used not only for melting but also for applying metallic coatings by thermodiffusion using powders and mixtures.

The disadvantages of the prototype consist in the following:
- during the melting there is no possibility to influence (increase) the melt surface area in the melting drum, which would increase the capture of globules of metal from the charge, reduce the melting time and enhance the yield of metal;
- removing the melting drum from the drive shaft positioned at an angle to the horizon is quite difficult, since it is done through a series of movements within the limits of the gap between the shaft and the drum socket; it is impossible to remove the drum using a lifting mechanism (crane) along the shaft;
- application of metallic coatings by thermodiffusion is possible only for small parts; if the length of the part is close to the depth of the drum, the application of coating becomes impossible, because in an inclined position of the drum a portion of the part surface will not be covered by the powder mixture.

### Summary of the invention

It is an object of this invention to provide a possibility to influence (increase) the melt surface area in the melting drum and, as a result, increase the capture of globules of metal from the charge, reduce the melting time, increase the service life of the melting drum and enhance the yield of metal; the inventive solution simplifies the removal of the melting drum from the drive shaft, and furthermore provides a possibility for applying metallic coatings by thermodiffusion in cases where the length of the part being treated is close to the depth of the drum.

According to the invention there is provided a melting furnace comprising a base mounted on a foundation, a body mounted on the base and provided with a roof and a door, a removable melting drum disposed in the body and made to permit mounting on a cantilever drive shaft, and also a heater mounted on the body by means of hinges, wherein the base is mounted on the foundation by means of a hinge with a horizontal axis of rotation perpendicular to the axis of rotation of the drum, and the heater may be provided with a means permitting reciprocatory movement thereof.

The applicant has not found any sources of information containing data on engineering solutions identical to the present invention, which enables to conclude that the invention conforms to the criterion "Novelty" (N).

Implementation of the features of the invention provide the object with important new properties. There is provided a possibility to increase the melt surface area in the melting drum by rotating the base and the elements disposed thereon relative to the horizontal axis, thus increasing the capture of globules of metal from the charge; it also becomes possible to remove the melting drum from the drive shaft in a single step when the shaft is brought to the horizontal position; when metallic coating is applied by thermodiffusion in this position the parts that are treated with the powder mixture are covered completely, even if their length is close to the depth of the drum.

The applicant has not found any sources of information containing data on the influence of the features of the invention on the technical result produced by the invention. In applicant's opinion, the abovementioned new property of the object enables to conclude that the invention conforms to the criterion "Inventive Step" (IS).

### Brief description of the drawings

The invention is further explained by way of detailed description of examples of its embodiments with reference to the following drawings, in which:
Figure 1 is a sectional side view;
Figure 2 is A-A section of Figure 1;
Figure 3 is an alternative mounting of the base on the foundation, with the hinge being positioned in the middle portion of the base;
Figure 4 is same as Figure 1, with an alternative embodiment of the foundation.

### Preferred embodiment

The melting furnace comprises a base 2 mounted on a foundation 1. A body 3 with a roof 4 and a door 5 is disposed on the base 2.

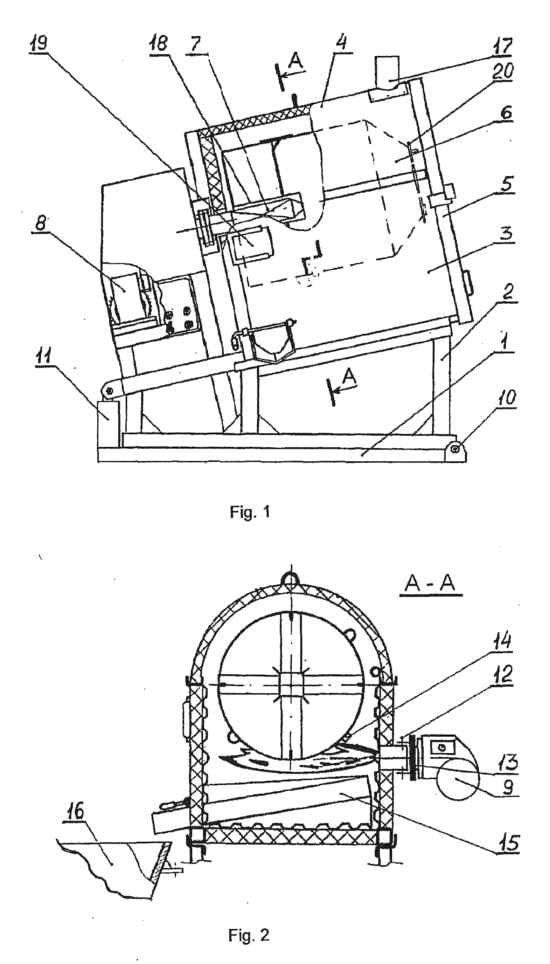

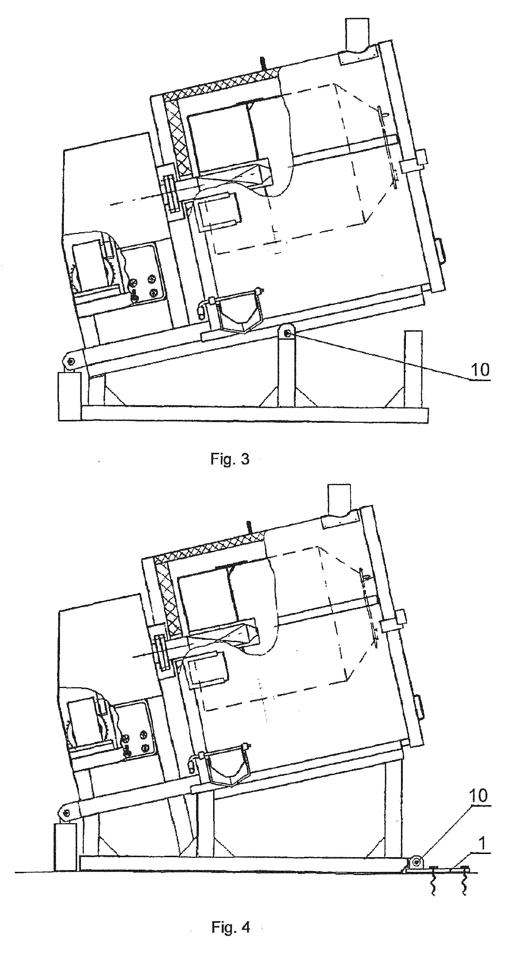

A removable melting drum 6 is disposed in the body 3, said drum being made to permit mounting on a cantilever shaft 7 with a square section, which is connected to a drive 8. A heater 9 is embodied as a flame torch, which in this particular example is fixed on the side wall of the body 3. The base 2 is mounted on the foundation 1 by means of a hinge 10 with a horizontal axis of rotation perpendicular to the axis of rotation of the drum. The hinge 10 can be positioned in the front portion of the base 2 (from the side of the door - see Figure 1) or in the middle portion of the base (see Figure 3). A lift 11, in particular a hydraulic cylinder, is mounted between the rear portion of the base 2 (from the side of the drive) and the foundation 1. The heater 9 is mounted on the wall of body 3 by means of hinges 12 and is provided with a means permitting reciprocatory movement thereof, in this particular example a cam mechanism 13 with a drive (the drive is not shown in the figures). A tap-hole 14 is provided for pouring molten metal. The metal is poured through a channel 15 into a casting mold 16. A pipe 17 is mounted in the roof 4 for releasing furnace gases. For transferring the torque from the shaft 7 to the drum 6 the drum is provided with a socket 18 having a section with shape that matches the square section of the shaft.

In the metal-containing wastes processing mode the furnace operates in the following way.

Using the lift 11 the base 2 is lifted until the longitudinal axis of the cantilever drive shaft 7 reaches horizontal position. Then the door 5 is opened and the roof 4 of the body 3 is removed. After that a crane or a fork lift is used to put the melting drum with plugged tap-hole 14, loaded with the charge and closed with a lid 20, on to the drive shaft 7, then the roof 4 of the body 3 is mounted and the door 5 is closed. The base 2 is returned to the initial position (see Figures 1, 3) using the lift 11, and the drive 8 of rotation of the drive shaft 7 with the drum 6 mounted thereon is turned on. Then the heater 9 is turned on and the rotating drum 6 is heated. To achieve a more uniform heating of the melting drum, the heater is subjected to a reciprocatory movement using the cam mechanism 13. The temperature inside the body of the furnace is maintained by an automatic regulating system (not shown on the figures).

Gases that form during the melting process exit through the pipe 17.

During the melting process the melt surface area can be increased by decreasing the angle of inclination of the drive shaft 7 relative to the horizon by means of the lift 11. This intensifies the capture of globules of metal from the charge by the melt surface, making it possible to reduce the melting time and increase the yield of metal.

After the melting is completed, the furnace is returned to the initial position, the drum 6 is stopped in the position where the tap-hole 14 is opposite the window 19 provided in the body 3.

Then the tap-hole 14 is tapped, the drive 8 is turned on and the drum 6 is switched to a position in which the tap-hole 14 faces down. Molten metal is poured through the channel 15 into the casting mold 16.

If the pouring of molten metal must be stopped, the drum 6 is rotated and stopped in a position in which the tap-hole is above the level of molten metal.

After completing the melting the heater is turned off.

The drum is removed from the drive shaft in reverse order of its installation. Because the drum is installed and removed with the drive shaft being in horizontal position, the abovementioned operations are performed along a trajectory that is much simpler that in the prototype.

In the mode of application of metallic coatings by thermodiffusion the furnace operates in a similar mode, only instead of loading the charge into the drum the parts to be treated and the powder mixture are loaded into the drum.

For treating parts with length close to the depth of the drum 6, the drive shaft 7 is brought to a position close to horizontal. After the treatment is completed, the drum 6 is removed and its contents are sifted through a sieve, separating treated parts from the powder mixture.

### Industrial applicability

The inventive device can be manufactured by means of common constructional materials and factory equipment. In applicant's opinion, this enables to conclude that the invention conforms to the criterion "Industrial Applicability" (IA).

## Claims

1. A melting furnace comprising a base mounted on a foundation, a body mounted on the base and provided with a roof and a door, a removable melting drum disposed in the body and made to permit mounting on a cantilever drive shaft, and also a heater mounted on the body by means of hinges, **characterized in that** the base is mounted on the foundation by means of a hinge with a horizontal axis of rotation perpendicular to the axis of rotation of the drum.

2. A melting furnace as claimed in claim 1, **characterized in that** the heater is provided with a means permitting reciprocatory movement thereof.
